# EUROPÄISCHE PATENTSCHRIFT

(11) **EP 3 427 992 B1**
(45) Veröffentlichungstag und Bekanntmachung des Hinweises auf die Patenterteilung: **20.03.2024**
(21) Anmeldenummer: 18182828.6
(22) Anmeldetag: 11.07.2018
(51) Int. Cl.: B60K 25/08

(54) **KÜHLFAHRZEUG**
REFRIGERATED VEHICLE
VÉHICULE FRIGORIFIQUE

(30) Priorität: 13.07.2017 DE 102017115764
(43) Veröffentlichungstag der Anmeldung: 16.01.2019
(73) Patentinhaber: Kiesling Fahrzeugbau GmbH, 89160 Dornstadt-Tomerdingen (DE)
(72) Erfinder: Kiesling, Peter, 89081 Ulm (DE)
(74) Vertreter: Baur & Weber Patentanwälte PartG mbB

(56) Entgegenhaltungen:
- EP-A2- 2 266 831
- WO-A1-2006/045124
- WO-A2-2010/133863
- US-A1- 2012 152 634
- US-A1- 2017 144 552
- US-B1- 8 439 140
- US-B1- 8 723 344

## Beschreibung

Die Erfindung betrifft ein Kühlfahrzeug.

Kühlfahrzeuge sind aus dem allgemeinen Stand der Technik bekannt und weisen üblicherweise einen wärmeisolierten Aufbau auf, der auf einem Fahrgestell eines Motorfahrzeugs oder eines Anhängers montiert ist. Zur Kühlung des wärmeisolierten Aufbaus ist typischerweise ein Kühlaggregat vorgesehen, das über einen Kühlkompressor verfügt, der typischerweise elektrisch antreibbar ist. Um eine gewisse Unabhängigkeit von der Versorgung mit elektrischer Energie durch das Fahrzeug zu erhalten, ist in manchen Ausführungen auch ein externer Stromanschluss zum Betrieb eines Elektromotors vorgesehen, so dass bei Stillstand des Fahrzeugs bzw. bei abgestelltem Motor eine Versorgung mit elektrischer Energie möglich ist.

Weiterentwicklungen sind aus dem Stand der Technik bekannt, die u. a. dazu dienen, alternative Versorgungen für das Kühlgerät bereitzustellen.

So ist aus der EP 2 266 831 A2 ein Stromerzeugungssystem für eine Kühlanlage eines Fahrzeugs bekannt, das mindestens ein Rad aufweist. Ein nachlaufender Arm ist schwenkbar mit einem Untergestell eines Fahrzeugs verbunden, um die von dem mindestens einen Rad erzeugte Rotationsenergie in elektrische Energie umzuwandeln. Mit dem nachlaufenden Arm ist ein Transformator gekoppelt, der mit einer elektrischen Kälteanlage verbunden ist.

Aus der DE 10 2010 038 281 A1 ist ein Radaufhängungssystem für ein Rad eines Kraftfahrzeugs bekannt, das eine Aufhängung zum Halten des Rades und eine Federung, um das Rad über die Aufhängung in einer Richtung quer zu einer Achsrichtung des Rades federnd zu halten, umfasst. Ein Generator wandelt Bewegungsenergie von Auslenkungen der Aufhängung generatorisch in elektrische Energie. Eine Steuereinheit steuert die dem Generator entnommene Energiemenge so, dass der Generator eine gewünschte Dämpfungskonstante bereitstellt.

Aus der DE 20 2012 012 303 U1 ist eine Windkraftanlage für LKW und Nutzfahrzeuge bekannt, die aus einem oder mehreren eingehausten horizontalen Rotoren besteht, die über jeweils beiderseits angebrachte Drehstromgeneratoren Strom erzeugen. Die hierfür erforderliche Drehung der Rotoren wird dabei durch den über Lüftungsgitter in die Konstruktion eingeleiteten Fahrtwind erzeugt.

Aus der EP 2 445 735 A2 sind Fahrzeuge zum Transport von Personen und/oder Gütern bekannt, die zumindest teilweise elektrische Energie und Elektromotoren als Antriebsaggregate benutzen und die verwendete elektrische Energie überwiegend oder zu einem wesentlichen Teil fahrzeugintern hergestellt wird aus Umwandlung von Sonnenstrahlung und kinetischer Energie beim Bremsen, durch Fahrtwind und durch Komponenten der kinetischen Energie von Gravitations-Einwirkungen auf die Fahrzeug-Karosserie, sowie Komponenten der kinetischen Energie aus Fliehkräften und Beschleunigungs-Bewegungen der Fahrzeug-Karosserie, und diese gewonnene Elektrizität bis zur Verwendung in geeigneten Speichermedien zwischengespeichert wird.

Aus der WO 2013/097844 A3 ist ein Fahrzeug bekannt, das mehrere ungefederte Bauteile bildende, um Radachsen drehbare Räder und einen ein gefedertes Bauteil bildenden Fahrzeugaufbau aufweist. Mit einer im Fahrzeugaufbau angeordneten Energieerzeugungseinrichtung, durch die eine Bewegung des Fahrzeugaufbaus oder Teilen des Fahrzeugaufbaus in elektrische Energie umsetzbar ist, die einem Akkumulator zuführbar ist. Die Energieerzeugungseinrichtung ist ein Energieabsorbungswandler und weist eine zylindrische Spulenwicklung auf, die einen Innenraum umschließt, in dem ein axial magnetisierter Permanentmagnet durch die Bewegung des Fahrzeugaufbaus oder eines Teils des Fahrzeugaufbaus koaxial bewegbar antreibbar angeordnet ist.

Aus der WO 2016/084017 A1 ist eine Energiesammelvorrichtung für ein Transportfahrzeug bekannt, die eine Antriebswelle mit einer elektrischen Wandlerschaltung und eine Nebenabtriebseinheit aufweist. Die elektrische Wandlerschaltung umfasst einen elektrischen Energiespeicher mit einer elektrochemischen Batterie und einer Kondensatorbank. Desweiteren ist eine Zapfwelleneinheit vorgesehen, die eine Schwenkplatte mit einer Einpunktkupplung und eine bogenförmige Schlitzkupplung umfasst, die sowohl zur Kopplung mit dem Fahrzeugchassis als auch mit der Schwenkplatte um die Einpunktkupplung um die bogenförmige Schlitzkupplung drehbar ist.

Aus der US 8 723 344 B1 ist ein Energierückgewinnungssystem für eine mobile Kühleinheit angegeben, das über ein Hilfsrad Rotationsenergie von einem Hauptrad abgreift, wobei das Hilfsrad das Hauptrad berührt.

Aus der WO 2006/ 045124 A1 ist ein Kühlfahrzeuganhänger bekannt, der zur Erzeugung von elektrischer Energie während der Fahrt oder zum Betreiben eines Kühlkompressors während der Fahrt einen mit der Fahrzeugsachse des Anhängers verbundene Translation umfasst. Die Translation ist über ein Getriebe und Führungsräder sowie über Spanner zwischen einem Generator und dem Fahrzeugachse aufgespannt.

In der US 2012/152634 A1 wird ein fünftes Rad für ein Personenkraftfahrzeug angegeben, über welches während der Fahrt Rotationsenergie über einen Riemen an einen Generator zur Erzeugung elektrischer Energie übertragen wird.

Aus der WO 2010/133863 A2 ist ein Energieerzeugungssystem zur Montage unterhalb eines Fahrzeugaufbaus bekannt, das ein während der Fahrt angetriebenes Rad umfasst, dessen Rotationsenergie über Riemenantriebe an einen Generator zur Erzeugung elektrischer Energie übertragen wird.

In der US 8 439 140 B1 ist ein Energieerzeugungssystem angegeben, welches einen auf der Fahrzeugachse eines Kraftfahrzeugs angebrachten Adapter, einen Riemen und einen Generator umfasst. Dreht sich während der Fahrt die Achse des Kraftfahrzeuges, so wird Rotationsenergie der Achse über den Riemen zum Generator übertragen.

Aus der US 2017/144552 A1 ist eine Einrichtung zur Energierückgewinnung für ein Elektrofahrzeug bekannt, die eine Kette umfasst, die in einen Zahnkranz auf der Hinterachse des Kraftfahrzeuges eingreift und Rotationsenergie auf einen Generator überträgt.

Ausgehend von diesem Stand der Technik haben sich der bzw. die Erfinder nun die Aufgabe gestellt, ein Kühlfahrzeug zu schaffen, das bezüglich der Versorgung eines Kühlaggregats mit elektrischer Energie verbesserte Eigenschaften aufweist.

Diese Aufgabe wird durch die Merkmale des Anspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Kühlfahrzeug geschaffen, das einen auf einem Fahrgestell angeordneten wärmeisolierten Kühlaufbau, der über ein beispielsweise elektrisch betreibbares Kühlgerät kühlbar ist, wobei das Fahrgestell eine von einer Bewegung des Kühlfahrzeugs angetriebene drehbare Welle aufweist, die mit einem Generator zur Erzeugung elektrischer Energie gekoppelt ist, die wenigstens teilweise zum Betrieb des Kühlgerätes einsetzbar ist, wobei die Welle mit einem an einem beweglichen Schwenkarm angeordnetem Laufrad verbunden ist, das mit dem Generator gekoppelt ist, und wobei der Generator bezüglich einer Drehzahl der Welle mit einem variablen Übersetzungsverhältnis betreibbar ist, das zur Steuerung des Generators in Abhängigkeit der Drehzahl der Welle und/oder einer elektrischen Last am Generatorausgang einstellbar ist. Der bewegliche Schwenkarm ist mit einem Lagerbock verbunden, und der Generator ist am Lagerbock angeordnet und mit ihm verbunden, wobei der Lagerbock schwenkbar ist und über eine Rückstelleinrichtung in einer Nulllage gehalten ist, die eine Lage des Laufrads erzeugt, die einer Vorwärtsfahrt entspricht.

Demnach wird der Betrieb des Kühlgeräts nicht nur über bereits vom Fahrzeughersteller bereitgestellte Komponenten ermöglicht, sondern eine durch die Fortbewegung des Kühlfahrzeugs in Rotation versetzte Welle betreibt einen zusätzlichen Generator, so dass auf diese Weise eine zusätzliche Energiequelle zur Verfügung steht. Insbesondere bei modernen Fahrzeugen ist oftmals der zur Verfügung stehende Platz beispielsweise in einem Motorraum so gering, dass keine zusätzlichen Komponenten mehr Platz finden, die durch die Kurbelwelle über einen Riemen oder dergleichen antreibbar wäre. Demnach kann zur Versorgung des Kühlgeräts der Motor des Kühlfahrzeuges nur noch sehr eingeschränkt genutzt werden, wobei die Erfindung hier Abhilfe schafft, indem sie eine zusätzliche Welle bereitstellt. Zur Steuerung des Generators bzw. der Lastabhängigkeit kann dabei die Welle mit einem variablen Übersetzungsverhältnis ausgestattet sein, so dass je nach Anforderung eine unterschiedliche Lastabgabe des Generators erzeugt werden kann.

Gemäß einer Ausführungsform der Erfindung ist das Übersetzungsverhältnis mittels einer Magnetkupplung oder einer Generatorsteuerung einstellbar, die ein Zu- oder Abschalten von Statorspulen oder ein Ankoppeln an einen Rotor steuert.

Bevorzugt kann die drehbare Welle mit einer Magnetkupplung versehen werden, die für ein variables Übersetzungsverhältnis sorgt. Eine Einstellbarkeit ist auch über die interne Generatorsteuerung möglich, wobei beispielsweise einzelne Statorspulen zu- oder abgeschaltet werden. Ebenfalls ist es denkbar, den Rotor des Generators als Bestandteil der Magnetkupplung auszugestalten. Auf diese Weise wird eine einfache Generatorsteuerung geschaffen, die eine Anpassung an die tatsächlich vorliegenden Lastverhältnisse ermöglicht.

Gemäß einer weiteren Ausführungsform der Erfindung ist die am Ausgang des Generators abgegebene Energie direkt an das Kühlgerät, an einen Pufferspeicher oder einer Batterie zuführbar.

Die vom Generator abgegebene Energie kann sowohl ausschließlich für das Kühlgerät zur Verfügung gestellt werden. Es ist aber auch vorgesehen, die vom Generator abgegebene Energie einem Pufferspeicher zuzuführen, der beispielsweise als Hochleistungsbatteriesatz bereitgestellt wird. Ebenso kann die Energie auch der Fahrzeugbatterie zugeführt werden, die Bestandteil eines Bordnetzes sein, so dass beispielsweise die Fahrzeugbatterie mittels des Generators aufgeladen werden kann. Der Pufferspeicher kann dabei auch als zusätzliche Batterie unabhängig vom Bordnetz bereitgestellt werden. Insbesondere bei einem Betrieb des Verbrennungsmotors des Kühlfahrzeugs mit einer Start-Stopp-Automatik ist ein Pufferspeicher vorteilhaft, da der im Stillstand abgestellte Verbrennungsmotor des Kühlfahrzeugs nicht für den Betrieb des Kühlgeräts verwendet werden kann. Dies könnte zu einer unerwünschten Erwärmung des Kuhlaufbaus führen oder hätte zufolge, dass eine Start-Stopp-Automatik überbrückt werden müsste, was im Zuge eines gesteigerten Umweltbewusstseins und/oder entsprechender Gesetzgebung nachteilhaft wäre.

Gemäß einer weiteren Ausführungsform der Erfindung ist elektrische Energie an das Kühlgerät von weiteren Quellen, insbesondere von einem Bremssystem mit Rekuperation, eines Windrads oder einer Solaranlage direkt oder indirekt über den Pufferspeicher zuführbar.

Neben der Versorgung des Kühlgeräts mittels des Generators ist es auch denkbar, über ein Bremsenergierückgewinnungssystem, eine Solaranlage oder eines Windrades zusätzliche Energiequellen zu schaffen, die entweder direkt an das Kühlgerät weitergegeben werden oder indirekt über das Laden des Pufferspeichers diesem zuführbar sind. Eine entsprechende Ladesteuerung, die die unterschiedlichen Quellen berücksichtigt, würde dann für eine entsprechende Verteilung der Energie sorgen.

Die Welle kann bei einer nicht beanspruchten Ausführung mit einem Rad oder einer Achse des Fahrgestells verbunden und mit dem Generator gekoppelt sein.

Die Welle kann beispielsweise mit einer Achse des Fahrzeugs verbunden sein, so dass diese durch die Bewegung des Fahrzeugs in Rotation versetzt wird. Dies ermöglicht eine einfache Ankopplung des Generators an bereits bestehende Komponenten des Fahrgestells.

Gemäß der Erfindung ist die Welle mit einem an einem beweglichen Schwenkarm angeordnetem Laufrad verbunden, das mit dem Generator gekoppelt ist.

Alternativ zu der soeben geschilderten Ausführungsform ist es besonders bevorzugt, ein weiteres Laufrad am Fahrzeug vorzusehen, das über einen beweglichen Schwenkarm mit dem Fahrgestell, mit dem darauf montierten Kühlaufbau oder mit einem Hilfsrahmen zwischen Fahrgestell und Aufbau des Kühlfahrzeugs verbunden ist. Über eine Bewegung des Laufrads erfolgt dann die Rotation der Welle, so dass das erfindungsgemäße Kühlfahrzeug ohne Eingriffe in die bestehenden Komponenten durch eine zusätzliche Energiequelle erweiterbar ist. Der bewegliche Schwenkarm kann als Einarm- oder Zweiarmschwinge ausgeführt sein.

Gemäß einer weiteren Ausführungsform der Erfindung weist das Laufrad einen kleineren Durchmesser als die Räder des Fahrgestells aufweist und ist vorzugsweise zwischen den Rädern des Fahrgestells an dessen Unterseite angeordnet.

In einigen Ausführungsbeispielen ist das Laufrad unterhalb des Fahrgestells angeordnet und befindet sich zwischen Vorderachse und Hinterachse in etwa mittig oder außermittig nach links oder rechts versetzt in Bezug auf die Querrichtung. Bei einer derartigen Anordnung des Laufrads bleiben die Außenmaße des Kühlfahrzeugs unverändert, so dass eine Fahrerin oder ein Fahrer des Kühlfahrzeugs keine zusätzliche Aufmerksamkeit beim Rangieren in Bezug auf das Laufrad aufwenden muss. Insbesondere bei Verwendung eines Tiefrahmens, der beispielsweise für den innerstädtischen Lieferverkehrt eingesetzt wird, wäre eine Anordnung in der Nähe der Hinterachse und in Fahrtrichtung bei Rechtsverkehr nach links versetzt vorteilhaft, da dies auch bei Unebenheiten in der Mitte der Fahrbahnoberfläche genügend Spielraum für das Laufrad lässt und gleichzeitig den möglichen Kontakt mit Randsteinen verringert. Eine Anordnung beispielsweise unmittelbar hinter der Hinterachse ist ebenfalls möglich.

Gemäß der Erfindung ist der bewegliche Schwenkarm mit einem Lagerbock verbunden.

Zur Führung des Laufrads ist demnach ein Lagerbock vorgesehen, der über den beweglichen Schwenkarm ein Aufliegen des Laufrads auf der Fahrbahn auch bei welligen Oberflächen sicherstellen kann. Durch den Lagerbock ist auch eine seitliche Führung des Laufrads gewährleistet. Der Lagerbock kann an dem Fahrgestell, dem Kühlaufbau oder einem Hilfsrahmen montiert sein.

Gemäß der Erfindung ist der Lagerbock schwenkbar und über eine Rückstelleinrichtung in einer Nulllage gehalten, die eine Lage des Laufrads erzeugt, die einer Vorwärtsfahrt entspricht.

Demnach wird sichergestellt, dass Beschädigungen bei möglichen seitlichen Kollisionen beispielsweise mit einem Randstein vermieden werden. Folglich wird der Lagerbock federbelastet in Nulllage gehalten, die einer Geradeausfahrt entspricht. Folglich findet beim Rückwärtsfahren kein Einlenken des Laufrades statt. Zusammen mit dem beweglichen Schwenkarm, der beispielsweise als Ein- oder Zweiarmschwinge ausgeführt sein kann und mit zusätzlichen Federn oder Dämpfern versehen sein kann, wird demnach eine verschleißarme Montage des Laufrads ermöglicht.

Gemäß einer weiteren Ausführungsform der Erfindung sind der Schwenkarm oder der Lagerbock teleskopierbar.

Diese Vorgehensweise ermöglicht es, den Generator zusammen mit dem Schwenkarm, dem Lagerbock und dem Laufrad an unterschiedliche Fahrzeuge anpassen zu können, wobei die genauen Abmessungen aufgrund der Teleskopierbarkeit auch nachträglich noch verändert werden können.

Gemäß einer weiteren Ausführungsform der Erfindung sind die Generatorwelle und der Schwenkarm in axialer Richtung zueinander ausgerichtet.

Demnach verändert sich bei Schwenken des Schwenkarms die Ausrichtung der Generatorachse und der Schwenkarmachse nicht, so dass eine einfache Ankopplung des Generators möglich wird, ohne dabei Ketten- oder Riemenspanner einsetzen zu müssen.

Gemäß der Erfindung ist der Generator am Lagerbock angeordnet.

Diese Vorgehensweise ermöglicht es, die ungefederte oder lediglich reifengefederte Masse gering zu halten, wobei der Generator am Lagerbock auch weniger Einflüssen, wie Kollisionen, Schläge, Schmutz oder Nässe ausgesetzt ist.

Gemäß einer weiteren Ausführungsform der Erfindung ist die Kraftübertragung zwischen dem Generator und Rad mithilfe eines Riemens, einer Kette oder einem Getriebe erzeugt. Dabei kann zum Schutz der Kette oder des Riemens vor Schmutz und Nässe eine Abdeckung montiert sein.

Je nach Lage des Generators kann über eine entsprechende Kraftübertragung die Drehbewegung des Laufrades zum Generator weitergeleitet werden. Dies ermöglicht eine vielseitige Umsetzung der Erfindung, die nicht auf bestimmte Ausgestaltungen begrenzt ist.

Gemäß einer weiteren Ausführungsform der Erfindung sind der Pufferspeicher und der Generator zusammen mit dem Schwenkarm und dem Laufrad als vorverdrahtete einbaubereite Einheit hergestellt.

Demnach kann die erfindungsgemäße Lösung auch als einbaubereite Einheit sowohl bei Neuwagen als auch bei der Nachrüstung bereits bestehender Kühlfahrzeuge eingesetzt werden. Die einbaubereite Einheit kann am Fahrgestell, am Kühlaufbau oder an einem Hilfsrahmen angeordnet sein, wobei ein entsprechend ausgestalteter Montagerahmen ebenfalls eingesetzt werden kann.

Nachfolgend werden einige Ausführungsbeispiele anhand der Zeichnungen näher erläutert. Es zeigen:
- Fig. 1: ein erfindungsgemäßes Kühlfahrzeug in einer Seitenansicht,
- Fig. 2: das erfindungsgemäße Kühlfahrzeug in einer Rückansicht, und
- Fig. 3: eine schematische Darstellung eines Energieversorgung für ein erfindungsgemäßes Kühlfahrzeug.

In den Figuren sind gleiche oder funktional gleichwirkende Bauteile mit den gleichen Bezugszeichen versehen.

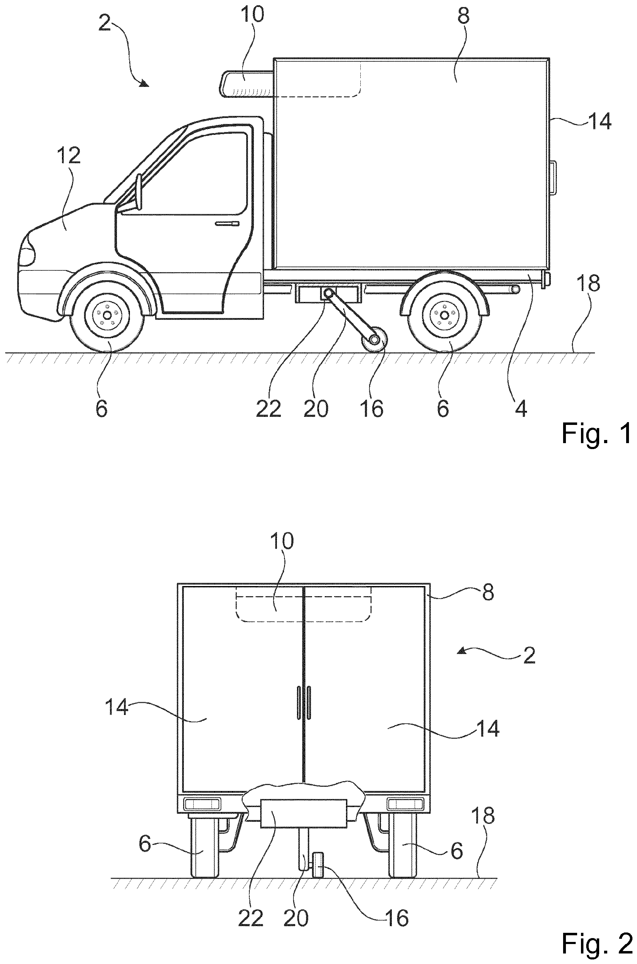

Unter Bezugnahme auf Fig. 1 ist nachfolgend eine erste Ausführungsform eines erfindungsgemäßen Kühlfahrzeugs 2 gezeigt. Das Kühlfahrzeug 2 weist ein Fahrgestell 4 auf, das auf fachübliche Weise mit Vorder- bzw. Hinterrädern 6 in Verbindung steht. Auf der Oberseite des Fahrgestells 4 befindet sich ein wärmeisolierter Kühlaufbau 8, dessen Innenraum von einem Kühlgerät 10 mit Kühlluft versehen wird. Zur Fortbewegung des Kühlfahrzeugs 2 ist im Bereich eines Führerhauses 12 ein Motor vorgesehen, der beispielsweise als Verbrennungsmotor ausgeführt wird. Auf der Rückseite des Kühlfahrzeugs 2 befinden sich Laderaumtüren 14, die einen Zugang in das Innere des Kühlfahrzeugaufbaus 8 ermöglichen.

Während der Fahrt des Kühlfahrzeugs 2 befindet sich ein Laufrad 16 in Kontakt mit einer Fahrbahnoberfläche 18. Das Laufrad 16 wird über einen beweglichen Schwenkarm 20 mit einem Generator 22 gekoppelt, so dass die Drehbewegung des Laufrades 16 beispielsweise über Riemen oder Kettenglieder an einen Rotor des Generators 22 übertragen werden kann. Das Laufrad 16 befindet sich zwischen den Vorder- und Hinterrädern 6 in Richtung der Hinterachse des Kühlfahrzeugs 2. Ander Postionen des Laufrads 16 sind ebenfalls möglich.

Der Aufbau des erfindungsgemäßen Kühlfahrzeugs 2 ist in Fig. 2 nochmals detaillierter in einer teilweise gebrochenen Darstellung gezeigt. Man erkennt, dass das Laufrad 16 über den Schwenkarm 20 mit dem Generator 22 in Verbindung steht, so dass bei Bewegung des Kühlfahrzeugs 2 der Rotor des Generators 22 in Drehbewegung versetzt wird, so dass in Zusammenwirkung mit einem Stator elektrische Energie erzeugt wird. Die Drehbewegung des Laufrads 16 wird demnach an eine Generatorwelle übertragen.

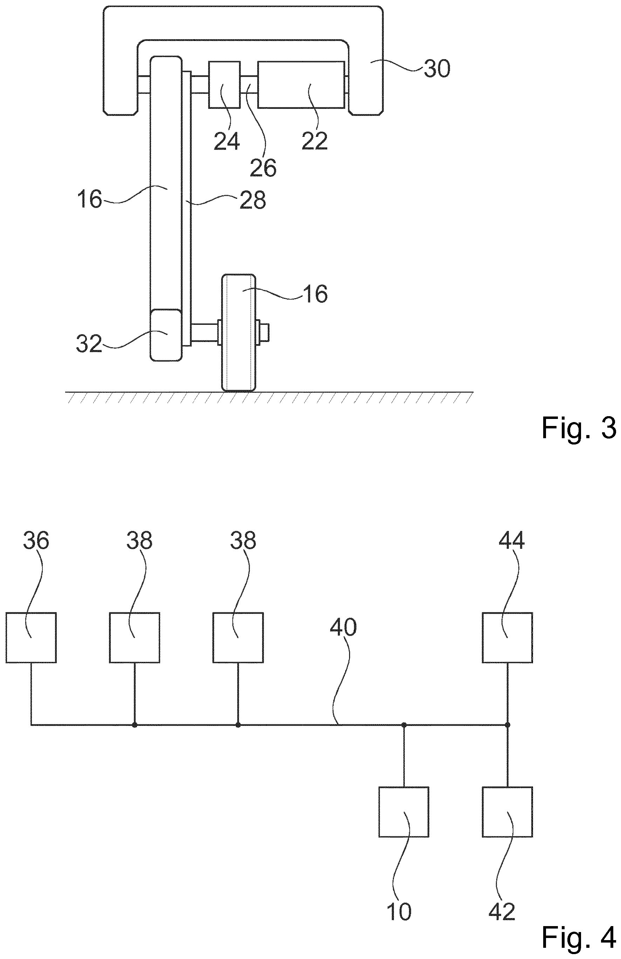

Der Aufbau bestehend aus Generator 22, Schwenkarm 20 und Laufrad 16 ist in Fig. 3 nochmals detaillierter dargestellt. Man erkennt, dass zwischen Laufrad 16 und Generator 22 ein Riemenantrieb vorgesehen ist, wobei das auf der Seite des Generators befindliche Riemenrad über eine Magnetkupplung 24 mit einer Welle 26 des Generators 22 verbunden ist. Der Riemen 28 kann auch durch eine Kette oder eine Kardanwelle oder dergleichen ersetzt sein. Desweiteren ist in Fig. 3 gezeigt, dass zwischen am Schwenkarm 20 und dem Generator 22 ein Lagerbock 30 angeordnet ist, der vorzugsweise schwenkbar gestaltet ist, um Beschädigungen bei möglichen seitlichen Kollisionen beispielsweise mit einem Randstein zu vermeiden. Der Lagerbock 30 ist durch eine nicht gezeigte Federeinrichtung in einer Geradeausfahrt gehalten, so dass beim Rückwärtsfahren des Kühlfahrzeugs 2 kein Einlenken des Laufrads 16 erfolgt. Desweiteren kann der Schwenkarm 20 mit einer Teleskopiervorrichtung 32 versehen sein, die beispielsweise auch am Lagerbock 30 befestigt sein kann. Aufgrund der Teleskopierbarkeit ist eine Anpassung an unterschiedliche Fahrzeugabmessungen möglich. Der Aufbau bestehend aus Generator 22, Schwenkarm 20 und Laufrad 16 sowie gegebenenfalls Lagerbock 30 kann am Fahrgestell 4 des Kühlfahrzeugs 2, am Kühlaufbau 8 oder an einem nicht dargestellten Hilfsrahmen befestigt werden. Der Schwenkarm 20 kann als Ein- oder Zweiarmschwinge ausgeführt sein und über eine Feder- oder Dämpfereinrichtung am Fahrgestell 4 des Kühlfahrzeugs 2, am Kühlaufbau 8 oder an dem Hilfsrahmen abgestützt werden.

Zur Steuerung der Abgabe der elektrischen Energie des Generators 22 kann entweder die Magnetkupplung 24 verwendet werden, wobei es aber auch vorgesehen sein kann, eine interne Generatorsteuerung zur Lastanpassung zu verwenden. Die interne Generatorsteuerung umfasst beispielsweise die Anpassung des Erregerstroms von Elektromagneten auf Seiten des Stators oder des Rotors, das Zuschalten einzelner Spulen des Stators oder eine magnetische Ankopplung des Rotors mit variablem Übersetzungsverhältnis an die Welle des Generators. Demnach ist es möglich, in Abhängigkeit der zu versorgenden Last bzw. der Drehzahl des Laufrads 16 eine Steuerung des Generators 22 durchzuführen.

In Fig. 4 ist schematisch eine Steuerung des Generators 22 gezeigt, die auch geeignet ist, mit anderen Quellen zur Versorgung von elektrischer Energie zusammenzuarbeiten. Die Generatorsteuerung 36 wirkt dabei mit weiteren Steuereinheiten 38 zusammen, die beispielsweise von einem Windrad oder auf der Dachseite des Kühlfahrzeugaufbaus 8 angeordneten Solarzellen gespeist werden. Die abgegebene elektrische Energie kann dazu verwendet werden, einen Kühlkompressor des Kühlaggregats 10 entweder direkt zu speisen. Ebenso kann, wie in Fig. 4 gezeigt ist, die elektrische Energie in ein Bordnetz 40 eingespeist werden, das mit der Fahrzeugbatterie 42 versehen ist. Somit kann speist werden, das mit der Fahrzeugbatterie 42 versehen ist. Somit kann über das Bordnetz 40 unabhängig von einer Lichtmaschine des Kühlfahrzeugs 2 zusätzliche elektrische Energie bereitgestellt werden, die zur Versorgung des Kühlaggregats 10 vollständig oder teilweise herangezogen werden kann. Vorteilhaft wird die elektrische Energie in eine Pufferspeicher 44 zwischen gespeichert, der als Hochleistungsbatteriesatz, beispielsweise als Li-lonen-Akku bereitgestellt wird und über eine genügend große Kapazität verfügt, um auch bei Stillstand des Fahrzeugs eine ausreichende Kühlleistung bewirken zu können.

### Liste der Bezugszeichen:

- 2: Kühlfahrzeug
- 4: Fahrgestell
- 6: Räder
- 8: Kühlaufbau
- 10: Kühlgerät
- 12: Führerhaus
- 14: Laderaumtür
- 16: Laufrad
- 18: Fahrbahnoberfläche
- 20: Schwenkarm
- 22: Generator
- 24: Magnetkupplung
- 26: Welle
- 28: Riemen
- 30: Lagerbock
- 32: Teleskopiervorrichtung
- 36: Generatorsteuerung
- 38: Steuereinheiten
- 40: Bordnetz
- 42: Fahrzeugbatterie
- 44: Pufferspeicher

## Patentansprüche

1. Kühlfahrzeug, das einen auf einem Fahrgestell (4) angeordneten wärmeisolierten Kühlaufbau (8), der über ein betreibbares Kühlgerät (10) kühlbar ist, wobei das Fahrgestell (4) eine von einer Bewegung des Kühlfahrzeugs (2) angetriebene drehbare Welle (26) aufweist, die mit einem Generator (22) zur Erzeugung elektrischer Energie gekoppelt ist, die wenigstens teilweise zum Betrieb des Kühlgerätes (10) einsetzbar ist, wobei die Welle (26) mit einem an einem beweglichen Schwenkarm (20) angeordnetem Laufrad (16) verbunden ist, das mit dem Generator (22) gekoppelt ist, und wobei der Generator (22) bezüglich einer Drehzahl der Welle (26) mit einem variablen Übersetzungsverhältnis betreibbar ist, das zur Steuerung des Generators (22) in Abhängigkeit der Drehzahl der Welle (26) und/oder einer elektrischen Last am Generatorausgang einstellbar ist, **dadurch gekennzeichnet, dass** der bewegliche Schwenkarm (20) mit einem Lagerbock (30) verbunden ist und der Generator (22) am Lagerbock (30) angeordnet und mit ihm verbunden ist, wobei der Lagerbock (30) schwenkbar ist und über eine Rückstelleinrichtung in einer Nulllage gehalten ist, die eine Lage des Laufrads (16) erzeugt, die einer Vorwärtsfahrt entspricht.

2. Kühlfahrzeug nach Anspruch 1, bei dem das Übersetzungsverhältnis mittels einer Magnetkupplung oder einer Generatorsteuerung (36) einstellbar ist, die ein Zu- oder Abschalten von Statorspulen oder ein Ankoppeln an einen Rotor steuert.

3. Kühlfahrzeug nach Anspruch 1 oder 2, bei dem die am Ausgang des Generators (22) abgegebene Energie direkt an das Kühlgerät (10), einem Pufferspeicher (44) oder einer Batterie (42) eines Bordnetzes (40) zuführbar ist.

4. Kühlfahrzeug nach Anspruch 3, bei dem elektrische Energie an das Kühlgerät (10) von weiteren Quellen, insbesondere von einem Bremssystem mit Rekuperation oder einer Solaranlage direkt oder indirekt über den Pufferspeicher (44) zuführbar ist.

5. Kühlfahrzeug nach einem der Ansprüche 1 bis 4, bei dem das Laufrad (16) einen kleineren Durchmesser als die Räder (6) des Fahrgestells (4) aufweist und vorzugsweise zwischen den Rädern (6) des Fahrgestells (4) an dessen Unterseite mittig oder außermittig angeordnet ist.

6. Kühlfahrzeug nach einem der Ansprüche 1 bis 5, bei dem der Schwenkarm (20) oder der Lagerbock (30) teleskopierbar sind.

7. Kühlfahrzeug nach einem der Ansprüche 1 bis 6, bei dem die Generatorachse und Schwenkarmachse in axialer Richtung zueinander ausgerichtet sind.

8. Kühlfahrzeug nach einem der Ansprüche 1 bis 7, bei dem die Kraftübertragung zwischen dem Generator (22) und Laufrad (16) mithilfe eines Riemens (28), einer Kette oder einem Getriebe erzeugt ist.

9. Kühlfahrzeug nach Anspruch 8, bei dem zum Schutz der Kette oder des Riemens (28) vor Schmutz und Nässe eine Abdeckung montiert ist.

10. Kühlfahrzeug nach einem der vorherigen Ansprüche, bei dem die Pufferspeicher (44) und der Generator (22) zusammen mit dem Schwenkarm (20) und dem Laufrad (16) sowie dem Lagerbock (30) als vorverdrahtete einbaubereite Einheit zum Einbau an Fahrgestell (4), Kühlaufbau (8), Montagerahmen oder Hilfsrahmen hergestellt sind.

## Claims

1. Refrigerated vehicle, a thermally insulated cooling structure (8) which is arranged on a chassis (4) and can be cooled by means of an operable cooling device (10), the chassis (4) having a rotatable shaft (26), which is driven by a movement of the refrigerated vehicle (2) and which is coupled to a generator (22) in order to generate electrical energy, which can be used at least partially in order to operate the cooling device (10), the shaft (26) being connected to an impeller (16) arranged on a movable pivot arm (20), which impeller is coupled to the generator (22), and the generator (22) being operable with a variable transmission ratio with respect to a rotational speed of the shaft (26), which transmission ratio can be adjusted depending on the rotational speed of the shaft (26) and/or an electrical load at the generator output in order to control the generator (22), **characterized in that** the movable pivot arm (20) is connected to a bearing block (30), and the generator (22) is arranged on and connected to the bearing block (30), the bearing block (30) being pivotable and held in a zero position by means of a restoring device, which produces a position of the impeller (16) which corresponds to a forward motion.

2. Refrigerated vehicle according to claim 1, wherein the transmission ratio can be adjusted by means of a magnetic coupling or a generator controller (36) which controls an activation or deactivation of stator coils or coupling to a rotor.

3. Refrigerated vehicle according to claim 1 or 2, wherein the energy emitted at the output of the generator (22) can be supplied directly to the cooling device (10), a buffer store (44) or a battery (42) of an on-board electrical system (40).

4. Refrigerated vehicle according to claim 3, wherein electrical energy can be supplied to the cooling device (10) from further sources directly or indirectly via the buffer store (44), in particular from a brake system with recuperation or a solar system.

5. Refrigerated vehicle according to any of claims 1 to 4, wherein the impeller (16) has a smaller diameter than the wheels (6) of the chassis (4) and is preferably arranged centrally or eccentrically between the wheels (6) of the chassis (4) on the underside thereof.

6. Refrigerated vehicle according to any of claims 1 to 5, wherein the pivot arm (20) or the bearing block (30) can be telescoped.

7. Refrigerated vehicle according to any of claims 1 to 6, wherein the generator axis and pivot arm axis are aligned with one another in the axial direction.

8. Refrigerated vehicle according to any of claims 1 to 7, wherein the force transfer between the generator (22) and the impeller (16) is generated by means of a belt (28), a chain, or a gear.

9. Refrigerated vehicle according to claim 8, wherein a cover is mounted in order to protect the chain or belt (28) from dirt and moisture.

10. Refrigerated vehicle according to any of the preceding claims, wherein the buffer store (44) and the generator (22), together with the pivot arm (20), the impeller (16) and the bearing block (30), are produced as a prewired installation-ready unit for installation on a chassis (4), cooling structure (8), assembly frame or subframe.

## Revendications

1. Véhicule frigorifique, lequel une structure frigorifique (8) isolée thermiquement et disposée sur un châssis (4), laquelle peut être refroidie par l'intermédiaire d'un appareil frigorifique (10) pouvant être mis en fonctionnement, dans lequel le châssis (4) présente un arbre (26) pouvant tourner, entraîné par un mouvement du véhicule frigorifique (2) et couplé à un générateur (22) pour la production d'énergie électrique pouvant être utilisée au moins partiellement pour le fonctionnement de l'appareil frigorifique (10), dans lequel l'arbre (26) est relié à une roue mobile (16) disposée sur un bras pivotant (20) mobile et accouplée au générateur (22), et dans lequel le générateur (22) peut fonctionner, par rapport à une vitesse de rotation de l'arbre (26), avec un rapport de transmission variable qui peut être réglé pour la commande du générateur (22) en fonction de la vitesse de rotation de l'arbre (26) et/ou d'une charge électrique à la sortie de générateur, **caractérisé en ce que** le bras pivotant (20) mobile est relié à un support de palier (30) et le générateur (22) est disposé sur le support de palier (30) et relié à celui-ci, dans lequel le support de palier (30) peut pivoter et est maintenu dans une position zéro par l'intermédiaire d'un dispositif de rappel, laquelle position zéro produit une position de la roue mobile (16) correspondant à la marche avant.

2. Véhicule frigorifique selon la revendication 1, dans lequel le rapport de transmission peut être réglé au moyen d'un accouplement magnétique ou d'une commande de générateur (36) qui commande l'activation ou la désactivation de bobines de stator ou un accouplement à un rotor.

3. Véhicule frigorifique selon la revendication 1 ou 2, dans lequel l'énergie fournie à la sortie du générateur (22) peut être amenée directement à l'appareil frigorifique (10), à un réservoir d'accumulation (44) ou à une batterie (42) d'un réseau de bord (40).

4. Véhicule frigorifique selon la revendication 3, dans lequel de l'énergie électrique peut être amenée à l'appareil frigorifique (10) depuis d'autres sources, en particulier depuis un système de freinage à récupération ou une installation solaire, directement ou indirectement par l'intermédiaire du réservoir d'accumulation (44).

5. Véhicule frigorifique selon l'une des revendications 1 à 4, dans lequel la roue mobile (16) présente un diamètre plus petit que celui des roues (6) du châssis (4) et est disposée de préférence au centre ou de manière excentrée entre les roues (6) du châssis (4) sur sa face inférieure.

6. Véhicule frigorifique selon l'une des revendications 1 à 5, dans lequel le bras pivotant (20) ou le support de palier (30) est télescopique.

7. Véhicule frigorifique selon l'une des revendications 1 à 6, dans lequel l'axe de générateur et l'axe de bras pivotant sont alignés l'un par rapport à l'autre dans la direction axiale.

8. Véhicule frigorifique selon l'une des revendications 1 à 7, dans lequel la transmission de puissance entre le générateur (22) et la roue mobile (16) est produite au moyen d'une courroie (28), d'une chaîne ou d'un engrenage.

9. Véhicule frigorifique selon la revendication 8, dans lequel un élément de recouvrement est monté pour protéger la chaîne ou la courroie (28) de la saleté et de l'humidité.

10. Véhicule frigorifique selon l'une des revendications précédentes, dans lequel le réservoir d'accumulation (44) et le générateur (22), conjointement avec le bras pivotant (20) et la roue mobile (16) ainsi que le support de palier (30), sont fabriqués en tant qu'unité précâblée prête à être installée et destinée à être installée sur le châssis (4), la structure frigorifique (8), un cadre de montage ou un cadre auxiliaire.
